# EUROPEAN PATENT APPLICATION

(11) **EP 3 056 299 A1**
(43) Date of publication of application: **17.08.2016**
(21) Application number: 14851982.0
(22) Date of filing: 07.10.2014
(51) Int. Cl.: B22F 1/00, B22F 9/20, C22C 27/02, H01G 9/052

(54) **NIOBIUM GRANULATED POWDER PRODUCTION METHOD**

(30) Priority: 08.10.2013 JP 2013210761
(71) Applicant: Showa Denko K.K., Tokyo 105-8518 (JP)
(72) Inventor: SHIBUYA Yoshinori, Tokyo 105-8518 (JP); TSUMITA Yasuo, Tokyo 105-8518 (JP); KAWASAKI Toshiya, Tokyo 105-8518 (JP)
(74) Representative: Strehl Schübel-Hopf & Partner
(86) International application number: PCT/JP2014/076742
(87) International publication number: WO 2015/053239

(57) **Abstract**

The present invention provides a method of producing a niobium granulated powder, comprising the steps of:
mixing niobium hydride and a metal oxide by a mechanical alloying method to produce a mechanical alloy;
pulverizing the mechanical alloy;
subjecting the pulverized mechanical alloy to heat treatment to allow the pulverized mechanical alloy to aggregate, to thereby form a granulated product. A capacitor comprising as an anode body a sintered body of the niobium granulated powder obtained by the method of the present invention is capable of increasing the capacitor capacitance by preventing excessive formation of a dielectric film.

## Description

### Technical Field

The present invention relates to a method of producing a niobium granulated powder. More specifically, the present invention relates to a method of producing a niobium granulated powder capable of producing an electrolytic capacitor element and a capacitor each having a larger electrostatic capacitance, a sintered body of the granulated powder obtained by the method, and a capacitor comprising the sintered body as an anode.

### Background Art

Tantalum or aluminum is often used for an anode body material of commercially available electrolytic capacitors. There is used an anode body in which an electrolytic chemical conversion film is formed on a porous sintered body obtained by forming and sintering tantalum powder or a porous foil obtained by etching aluminum, which is increased in surface area per unit volume. A tantalum electrolytic capacitor and an aluminum electrolytic capacitor have different use regions for sufficient exhibition of their performance, and hence co-exist in industry.

Niobium is an element which belongs to the same group as tantalum and exhibits similar physicochemical behavior to tantalum. Exchange of tantalum with niobium is relatively easily conceived because niobium is an abundant resource and is inexpensive as compared to tantalum, and has similarities to tantalum in balance between a density and a relative dielectric constant of its oxide and in physical property values. Niobium powder as an alternative to the tantalum powder has been investigated and developed.

However, a niobium oxide film, which is a dielectric of a niobium electrolytic capacitor, is unstable as compared to a tantalum oxide film. This is due to various intermediate oxide forms of niobium. This results in an increase in leakage current because oxygen in the oxide film easily transfers so that the effective thickness of the oxide film exhibiting a dielectric constant is changed, and transferred oxygen works as a carrier to have semiconducting properties.

In addition, along with downsizing of electronic devices in recent years, such as a mobile phone and a computer, downsizing of electronic parts is essential. Along with this, the tantalum powder constituting the tantalum electrolytic capacitor has been progressively increased in capacitance. The same applies to the niobium electrolytic capacitor, and niobium powder constituting the capacitor is required to have a large capacitance. Investigations have been made on increasing the specific surface area of the niobium powder so that the niobium powder has a large capacitance.

In order to increase the specific surface area, the powder is basically reduced in the size of its primary particles. However, when the powder is reduced in the size of its primary particles, a binding portion between the primary particles becomes thinner in a granulated product in which several hundreds of primary particles are aggregated. As a result, when the oxide film is formed through electrolytic chemical conversion, conduction is cut off at the binding portion, resulting in a reduction in area of a portion functioning as an anode. There are some reports of examples in which the electrostatic capacitance is not successfully increased owing to the above-mentioned phenomenon.

In view of the foregoing, many investigations have been made for solving those problems. Such investigations include many discussions about a method involving reducing a chemical conversion constant, which is a thickness of an electrolytic chemical conversion film growing per chemical conversion voltage, through use of an alloy-based material, a method involving increasing a dielectric constant of the electrolytic chemical conversion film, and the like.

For example, Patent Document 1 (JP 10-242004 A, US 6115235) teaches that a leakage current of a niobium capacitor is reduced by partially nitriding niobium powder.

Patent Document 2 (JP 2002-25864 A, US 6643120) teaches that a sintered body and a capacitor having a low specific leakage current are configured by using niobium powder containing antimony.

Patent Document 3 (WO 2002/015208 A1, US 6652619) discloses a niobium powder capable of producing a capacitor having good leakage current characteristics or a large electrostatic capacitance through use of an alloy between various elements and niobium, and a sintered body and a capacitor thereof.

Patent Document 4 (JP 2010-533642 A, WO 2009/012124 A2) discloses a powder and an anode capable of achieving a low specific leakage current by doping a tantalum-niobium multiple oxide with various elements.

Patent Document 5 (JP 2008-156202 A, US 8107219 B2) discloses a dielectric ceramic of barium titanate containing various elements, and has a low temperature coefficient of specific dielectric constant by virtue of the contained elements.

### Prior Art

### Patent Documents

[Patent Document 1] JP 10-242004 A (US 6115235)
[Patent Document 2] JP 2002-25864 A (US 6643120)
[Patent Document 3] WO 2002/015208 A1 (US 6652619)
[Patent Document 4] JP 2010-533642 A (WO 2009/012124 A2)
[Patent Document 5] JP 2008-156202 A (US 8107219)

### Disclosure of Invention

### Problem to be Solved by Invention

An object of the present invention is to provide a method of producing a niobium granulated powder capable of producing an electrolytic capacitor element and a capacitor each having a larger electrostatic capacitance by a method different from the methods of the conventional art, a sintered body of the granulated powder obtained by the method, and a capacitor comprising the sintered body as an anode.

### Means to Solve Problem

As a result of extensive investigations, the inventors of the present invention have found that a niobium granulated powder capable of producing an electrolytic capacitor and a capacitor element each having a larger electrostatic capacitance is obtained when a mechanical alloy is produced by a mechanical alloying method using as raw materials niobium hydride and a metal oxide, preferably yttrium oxide, and then is subjected to pulverization treatment and heat treatment. Thus, the present invention has been completed.

That is, the present invention relates to the following method of producing a niobium granulated powder according to [1] to [9], a sintered body of the niobium granulated powder according to [10], an anode body according to [11], and a capacitor according to [12].
[1] A method of producing a niobium granulated powder, comprising the steps of:
   mixing niobium hydride and a metal oxide by a mechanical alloying method to produce a mechanical alloy;
   pulverizing the mechanical alloy;
   subjecting the pulverized mechanical alloy to heat treatment to allow the pulverized mechanical alloy to aggregate, to thereby form a granulated product.
[2] The method of producing a niobium granulated powder according to [1] above, in which the metal oxide to be used includes a metal oxide represented by a composition formula M₂O₃, where M represents a metal element which can be a trivalent cation.
[3] The method of producing a niobium granulated powder according to [2] above, in which M represents one or more kinds selected from scandium, yttrium, lanthanoids, and actinoids.
[4] The method of producing a niobium granulated powder according to [3] above, in which M represents yttrium.
[5] The method of producing a niobium granulated powder according to any one of [1] to [4] above, in which the niobium granulated powder has an atomic ratio of niobium to a metal element derived from the metal oxide falling within a range of from 997:3 to 970:30.
[6] The method of producing a niobium granulated powder according to any one of [1] to [5] above, in which the niobium hydride to be used is composed of powder having passed through a sieve having an opening of 1 mm.
[7] The method of producing a niobium granulated powder according to any one of [1] to [6] above, in which a stirring ball mill is used for mixing niobium hydride and a metal oxide.
[8] The method of producing a niobium granulated powder according to any one of [1] to [7] above, comprising, after the mixing niobium hydride and a metal oxide, pulverizing the mixture so that a D₅₀ value, which is a 50% particle size in a volume-based cumulative particle size distribution, measured with a laser diffraction particle size distribution analyzer is 0.7 µm or less.
[9] The method of producing a niobium granulated powder according to any one of [1] to [8] above, in which an alkaline earth metal oxide is used as a pore forming material in the case of subjecting the mechanical alloy to heat treatment to thereby form a granulated product.
[10] A sintered body of the niobium granulated powder obtained by the production method described in any one of [1] to [9] above.
[11] An anode body, which is produced from the sintered body described in [10] above.
[12] A capacitor, comprising the sintered body described in [10] above as an anode.

### Effects of Invention

A dielectric formed body of the niobium granulated powder obtained by the method of the present invention is improved in various kinds of performance. Specifically, the capacitor, comprising as an anode the sintered body of the niobium granulated powder according to the present invention, can be increased in capacitor capacitance through prevention of excessive formation of a dielectric body film.

### Brief Description of Drawings

FIG. 1 is an illustration of a bonding model of niobium pentoxide (Nb₂O₅).
FIG. 2 is an illustration of a bonding model in which a part of niobium (Nb) atoms of niobium pentoxide (Nb₂O₅) are replaced by yttrium (Y) atoms.
FIG. 3 is a graph for showing withstand voltage curves of anode bodies in Examples.

### Description of Embodiments

In a sintered body of the niobium granulated powder according to the present invention, metal elements of a metal oxide are abundantly present near the surfaces of niobium particles. Therefore, when the sintered body is used to be subjected to electrolytic chemical conversion, oxygen is trapped in the vicinity of the metal elements present near the surfaces of the niobium particles, and thus the transfer of oxygen is suppressed in a niobium oxide film, with the result that an increase in leakage current can be prevented. Such phenomenon is described in detail by describing an embodiment in which the metal element is yttrium.

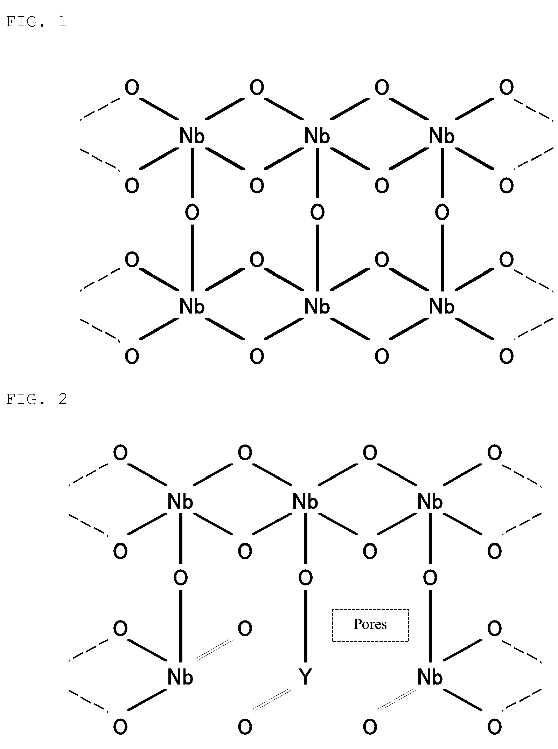

As illustrated in FIG. 1, in niobium pentoxide (Nb₂O₅), five oxygen (O) atoms are bonded to one niobium (Nb) atom, and each O atom is bonded to another adjacent niobium (Nb) atoms. In this case, 5×1/2 O atoms are coordinated to one Nb atom.

On the other hand, a binding model of niobium pentoxide (Nb₂O₅) in which a part of Nb atoms are replaced by yttrium (Y) atoms is illustrated in FIG. 2. In this case, 1.5 O atoms are coordinated to one Y atom because the valence of Y atoms is +3, and some of O atoms are double bonded to Nb atoms for charge balance. Along with this, in the niobium oxide in which a part of Nb atoms are replaced by Y atoms, pores are formed as illustrated in FIG. 2. Oxygen transferring in niobium pentoxide is trapped in the pores thus formed, and hence it is presumed that an effect of suppressing the transfer of oxygen, which causes a reduction in capacitance, is exhibited.

In addition, when the ratio of yttrium oxide is excessively high in a niobium pentoxide matrix owing to a high content of yttrium oxide, yttrium oxide forms a matrix structure alone, and hence it is considered that the pores are not formed around the matrix structure because of a balanced atomic ratio between O atoms and Y atoms. Accordingly, it is presumed that the presence amount of yttrium oxide needs to be adjusted appropriately.

As described above, a capacitor produced by using the niobium granulated powder of the present invention, in which yttrium oxide is appropriately distributed in the niobium pentoxide matrix, is suppressed in the transfer of oxygen in the oxide film, and hence can be increased in capacitance.

Even when the metal element is scandium, a lanthanoid, or an actinoid, which is an element other than yttrium, the similar effect is expected, and it is presumed that the transfer of oxygen is suppressed.

The present invention is described in detail below.

A method of producing a niobium granulated powder according to the present invention includes the steps of: mixing niobium hydride and a metal oxide by a mechanical alloying method to produce a mechanical alloy; pulverizing the mechanical alloy; and subjecting the pulverized mechanical alloy to heat treatment to allow the pulverized mechanical alloy to aggregate, to thereby form a granulated product.

The "mechanical alloying method" refers to a method involving repeatedly folding and rolling powders with each other through utilization of collision energy of balls at the time of milling with the balls in an inert atmosphere, to thereby finely mix the powders. In the mechanical alloy formed by the mechanical alloying method, the powders can be mixed up to an atomic order ultimately. Therefore, a specific alloy phase which cannot be obtained by the conventional-art methods is formed in some cases.

In the present invention, the "mechanical alloy" means an alloy obtained by mixing niobium hydride and the metal oxide containing yttrium or the like by the mechanical alloying method, and may contain a plurality of kinds of alloy phases.

In addition, the step of producing the mechanical alloy by the mechanical alloying method is important in the present invention. It is presumed that, when an appropriate concentration gradient is formed between niobium and a metal element of the metal oxide in the mechanical alloy, a dielectric formed body of a niobium granulated powder to be produced is improved in performance.

As niobium hydride serving as a raw material, hydrogen absorbed niobium hydride obtained by heating a niobium ingot under a hydrogen atmosphere is generally utilized. However, a production method for the raw material is not particularly limited as long as hydrogen-embrittled niobium powder is obtained, such as one obtained by washing, with an acid including hydrofluoric acid, reduced niobium powder obtained by reducing a niobium fluoride with sodium, to thereby remove impurities and allow hydrogen absorption at the same time, or one obtained by washing, with an acid, deoxygenated niobium powder obtained by subjecting a niobium oxide to deoxygenation treatment with magnesium or the like, to thereby remove magnesium serving as a reducing agent, and further washing the resultant with hydrofluoric acid to allow hydrogen absorption.

However, niobium powder which has a low degree of hydrogen absorption or is dehydrogenated through vacuum heat treatment is often flattened without becoming finer in the subsequent milling step because such powder loses brittleness and exhibits malleability and ductility. The powder in such shape is difficult to be granulated. In order to achieve hydrogen embrittlement, the concentration of hydrogen in niobium hydride is from 0.4 mass% to 1.0 mass%, preferably from 0.7 mass% to 1.0 mass%.

As the metal oxide serving as another raw material, a metal oxide represented by the composition formula M₂O₃, where M represents a metal element having an electron configuration with which the metal element becomes a trivalent cation, is effective. Examples of the metal element M include scandium (Sc), yttrium (Y), lanthanoids, and actinoids. Of those, yttrium oxide, in which yttrium has an atomic radius close to that of niobium, is more effective. A commercially available ceramics additive material, a general reagent, or the like may be used as yttrium oxide with no limitation, but in order to efficiently form the mechanical alloy of one embodiment of the present invention, a particle diameter described below is an important factor.

The mixing ratio between niobium hydride and the metal oxide is from 997:3 to 970:30 (in the case of yttrium, from 0.3 at% to 30 at%), preferably from 997:3 to 990:10 (in the case of yttrium, from 0.3 at% to 1.0 at%), more preferably from 997:3 to 995:5 (in the case of yttrium, from 0.3 at% to 0.5 at%), in terms of atomic ratio of niobium to a metal. When the mixing ratio is less than 997:3 (less than 0.3 at%), the metal has a small effect. When the mixing ratio exceeds 990:10 (exceeds 1.0 at%), there is a tendency that a leakage current starts to increase.

The atomic ratios of niobium to a metal in the granulated powder and an anode body are each measured by a general elemental analysis method, such as an atomic absorption method, after entirely dissolving a sample.

In order to produce the mechanical alloy by using those raw materials, the mechanical alloying method capable of concurrently performing fine pulverization and mixing of the raw materials, specifically a method involving using a stirring ball mill is preferably used. Preferred examples of the stirring ball mill include an attrition ball mill and a bead mill. The production of the mechanical alloy by the above-mentioned method is more efficient because the step of mixing niobium hydride and a metal oxide to produce a mechanical alloy and the step of pulverizing the mechanical alloy can be performed at the same time.

The production of the mechanical alloy by the mechanical alloying method serving as a first stage is described in detail below taking as an example the case where the metal oxide is yttrium oxide and a bead mill is used.

As niobium hydride particles serving as raw material particles, niobium hydride particles having passed through a sieve having an opening of 1 mm are used. It is desired that yttrium oxide have a particle diameter of from 0.4 µm to 100 µm, preferably from 0.4 µm to 1 µm. When the niobium hydride particles each have a size of more than 1 mm, beads for pulverizing the niobium hydride particles are increased in diameter, and hence a dead space in the mill increases, resulting in inefficient pulverization. The beads to be used for the bead mill each have a bead diameter of from 0.3 mm to 3 mm. The achievement degree of pulverization depends on the bead diameter, and hence it is preferred to change the beads to beads each having a smaller diameter at the time when the average particle diameter of the materials becomes several micrometers. Multi-stage pulverization treatment involving, for example, coarse pulverization with beads each having a diameter of 3 mm and then fine pulverization with beads each having a diameter of 0.5 mm is efficient and desired.

The loaded amount of the beads is preferably from 60% to 90% with respect to the inner volume of a pot of the mill. When the loaded amount is less than 60%, the number of times of collision between the beads and the raw materials is small, resulting in poor pulverization efficiency. When the loaded amount exceeds 90%, the number of times of the collision excessively increases, with the result that the device itself stops owing to an excessive load.

A stirring speed is preferably from 20 Hz to 30 Hz. When the stirring speed is less than 20 Hz, the collision speed between the beads and the raw materials is low, resulting in poor pulverization efficiency. When the stirring speed exceeds 30 Hz, the collision speed is excessively high, with the result that the device itself may be damaged.

It is necessary that the material of the beads have a high hardness as compared to yttrium oxide. Many commercially available beads, such as zirconia, yttria-stabilized zirconia, and silicon nitride, satisfy such conditions and hence can be used.

With regard to a pulverization environment, dry pulverization is performed under an inert gas atmosphere and wet pulverization is performed under a liquefied gas, water, or an organic solvent so that an abrupt reaction between a new surface of niobium hydride, which is newly generated along with fine pulverization of niobium hydride, and oxygen is avoided. Of those, a wet pulverization method involving using water as a dispersion medium, by which the materials can be continuously loaded into and discharged from the bead mill, and subsequently can be handled as a slurry, is simple and preferred.

In addition, in the mechanical alloying, heat is generated through collision between the beads and a sample, or heat is generated through a reaction of a fracture surface of niobium hydride generated through the pulverization with oxygen. Therefore, the treatment temperature in the pot of the mill needs to be controlled. The temperature in the pot of the mill is preferably a freezing point or more and 10°C or less so that the oxidation of niobium is minimalized.

The completion point of the pulverization is judged by determining the average particle diameter of the materials. As the most rapid and simple method, a method involving using a laser diffraction particle size distribution analyzer is recommended. A pulverization time and the average particle diameter have an exponential relationship, and hence efficient operation is achieved by sampling the materials at constant time intervals during the pulverization, and determining a D₅₀ value (50% particle size in a volume-based cumulative particle size distribution), which is an average particle diameter, to thereby preliminarily approximately calculate a pulverization time required to achieve a desired primary particle diameter.

Mechanical alloy particles thus pulverized have a D₅₀ value of preferably 0.7 µm or less, more preferably 0.5 µm or less. When the mechanical alloy particles have an average particle diameter of more than 0.7 µm, the mechanical alloy particles are produced with less opportunity for collision with the used beads, and a sufficient mechanical alloy is not obtained.

In the case of the wet pulverization, a slurry of the mechanical alloy particles after the completion of the pulverization is an aggregate of the particles. Therefore, in general, the particles are densely filled through direct removal of the dispersion medium. When heat treatment is performed under such state, the particles are entirely integrated and do not function as powder for a capacitor. Therefore, the particles need to be appropriately granulated. Accordingly, at this time, it is preferred to use a pore forming material after the mechanical alloying so that the particles after the heat treatment become porous.

The pore forming material is not particularly limited as long as the pore forming material is a substance which has no reactivity to the mechanical alloy and can be easily removed, but the pore forming material is preferably a substance which can be directly added to the slurry. Specific examples of the pore forming material include an oxide, an inorganic salt, and an organic compound. Of those, an alkaline earth metal oxide is preferred because the alkaline earth metal oxide is not evaporated through the heat treatment by virtue of a high melting point and is easily removed by, for example, washing with an acid. Calcium oxide and magnesium oxide are more preferred. When the above-mentioned compounds are used, oxygen in the pore forming material is suppressed from being heat diffused into niobium, and deterioration in performance of a niobium capacitor can be prevented.

The pulverized mechanical alloy is subsequently subjected to heat treatment to aggregate, to thereby form a granulated product.

Granulation is performed in order to improve the physical property values of powder and enable easy transportation. Whereas non-granulated powder is in the form of an agglomerate of particles having indefinite shapes and exhibits poor flowability, granulated powder is preferred because the granulated powder has a round shape and good flowability, and exhibits a stable effect in a molding step of forming a capacitor without die leakage and die galling.

When the mechanical alloy is subjected to the heat treatment, niobium hydride is dehydrogenated, yttrium oxide is deoxidized with generated hydrogen, and alloying between generated yttrium atoms and generated niobium atoms through heat diffusion is promoted and aged, and concurrently, a neck portion between niobium particles serving as a matrix is diffusion-grown, resulting in an increase in strength of the particles.

The heat treatment temperature is preferably from 1,000°C to 1,300°C. When the heat treatment temperature exceeds 1,300°C, diffused atoms are excessively directed to reduce surface energy, and hence a specific surface area reduces. This directly leads to a reduction in electrostatic capacitance of powder. Therefore, the heat treatment conditions are determined by itself by setting the electrostatic capacitance to an appropriate range.

In an alloying method by the mechanical alloying, yttrium is first present under the state of being applied onto the surface of a grain boundary of the niobium particles serving as a matrix component. In the heat treatment, yttrium slightly diffuses in the direction of the surfaces of the niobium particles and in the direction of the inside of a particle structure. Therefore, yttrium is basically present near the surfaces of the niobium particles or on the grain boundary of the niobium particles, and not present in deep portions of the particles. An electrolytic chemical conversion film of a capacitor is formed near the surfaces of the particles, and hence the transfer of oxygen in the oxide film can be suppressed by efficiently concentrating yttrium near the surfaces of the particles.

After the completion of the heat treatment, the alloy is in the form of an agglomerate, and hence is crushed into a granular form by an appropriate method, and its particle size distribution is adjusted. As a crusher, a roll granulator, a pin mill, a speed mill, or the like may be used. In addition, the particle size may be adjusted by using a sieve in combination so that powder having a particle size distribution falling within a required range is obtained. In addition, at this time, fine particles result from broken pieces of the crushed particles and have a large influence on physical property values associated with the dynamic characteristics of the powder, such as an angle of repose and flowability. Therefore it is desired to adjust the particle size particularly of the finer particles.

When the alloy particles after the crushing contain the pore forming material, the pore forming material is preferably removed in this stage. When the pore forming material is an inorganic salt, the pore forming material is removed with an appropriate solvent. When the pore forming material is an oxide, the pore forming material is removed with an appropriate acid, alkali, or chelate agent. Reaction heat is often generated along with the removal, and in this case, the surface of the alloy may be oxidized owing to niobium and yttrium each having a high affinity for oxygen. The temperature of the dissolution and removal is desirably less than 50°C, particularly preferably from 0°C to 30°C. After the removal, an excessive solvent is washed with water, an alcohol, or the like. When the pore forming material is an organic compound, the pore forming material is decomposed through the heat treatment and already removed from the particles. However, it is desired to once perform washing with an appropriate solvent, because fine particles can be further removed by an elutriation effect of the washing.

When calcium oxide is used as the pore forming material, calcium oxide may be removed with a mineral acid other than phosphoric acid and sulfuric acid. When magnesium oxide is used as the pore forming material, magnesium oxide may be removed with a mineral acid other than phosphoric acid.

After the washing, the solvent is removed from the particles with a dryer. For the drying, a general vacuum dryer may be used with no limitation. When the solvent is water, a drying temperature is desirably 50°C or less until the solvent is sufficiently vaporized. A drying time can be shortened by removing water with a water-soluble organic solvent in advance. While the pressure in the dryer reduces when the solvent is vaporized, it is desired to increase the temperature to 50°C or more at the time when bumping does not occur. In addition, when the temperature is increased up to 250°C at this time while a nitrogen atmosphere is adopted in the dryer, the surfaces of the alloy particles can be nitrided, which provides an antioxidant effect.

The particles thus obtained can be used as yttrium-containing niobium powder for a capacitor in a facility using general niobium powder for a capacitor or tantalum powder for a capacitor, such as a molding device, a sintering device, a chemical conversion device, an impregnation device, a paste application device, a frame mounting device, or a sealing device, instead of these powders with no particular limitation.

### Examples

Specific examples of the present invention are hereinafter described by way of Examples and Comparative Examples. However, the present invention is by no means limited thereto. In Examples and Comparative Examples, "%" refers to "mass%" unless otherwise stated.

In Examples and Comparative Examples, analysis (chemical analysis) of oxygen and yttrium in niobium (granulated) powder, a specific surface area (m²/g) of the niobium powder, a bulk density (g/cm³) of the niobium powder, buckling strength (N/mm²) of a sintered body, and electrostatic capacitance (µFV/g) of an anode body were measured by methods described below.

Chemical analysis: Quantitative determination was performed with an analyzer of oxygen in a metal and with an inductively coupled plasma (ICP) emission spectrophotometer after a sample was dissolved.

Specific surface area: The specific surface area was measured with a BET-type specific surface area measuring device.

Bulk density: The bulk density was measured with a bulk density measuring device in accordance with JIS Z 2504.

Electrical characteristics: The electrical characteristics were measured by using platinum black electrodes and a 30%-sulfuric acid solution as a measurement liquid at a bias voltage of 1.5 V at 120 Hz.

Measurement after heating: In simulating a reflow furnace for soldering a capacitor to a substrate, an anode body was heated at 260°C for 20 minutes, left to be cooled, and then measured for the electrical characteristics.

### Example 1:

A niobium hydride (concentration of hydrogen: 0.94%) agglomerate prepared by allowing a niobium ingot to absorb hydrogen was pulverized with an impact mill, and then classified with a gyro sifter using a sieve having an opening of 1 mm. Niobium hydride particles having passed through the sieve were used as a raw material in the following steps. At this time, the concentration of hydrogen in the niobium hydride particles was found to be 0.95%.

On the other hand, commercially available Y₂O₃ powder having a purity of 99.9% and an average particle diameter of 1.0 µm was prepared as yttrium oxide. The concentration of yttrium in the compound was found to be 39.4%.

Both the materials were mixed and pulverized through use of pure water as a dispersion medium, and thus a mechanical alloy was formed. In the mechanical alloying step, alloying and fine pulverization were concurrently performed with a bead mill. The setting conditions of the bead mill were as follows: zirconia beads each having a diameter of 3 mm were used, the loaded amount of the beads was set to 80 vol%, and the number of stirring revolutions was set to 25 Hz. With regard to the raw materials to be treated, the niobium hydride and the yttrium oxide powder were prepared so that the amount of niobium in terms of a pure component was 10 kg in total, and the atomic ratio of niobium to yttrium was 997:3. The mixture was subjected to wet pulverization by setting a concentration of a slurry to 50% for 3 hours. 2 Hours later, the average particle diameter was measured with a laser diffraction particle size distribution analyzer, and found to be 2.3 µm in terms of D₅₀ value. Next, the beads were changed to silicon nitride beads each having a diameter of 0.5 mm, and the pulverization was continued until the D₅₀ value reached 0.5 µm. 6 Hours later, when the D₅₀ value reached 0.5 µm, a slurry in which mechanical alloy particles were dispersed was recovered.

Next, 5 kg of calcium oxide (pore forming material) having an average particle diameter of 1 µm was added to the slurry in which mechanical alloy particles were dispersed, followed by sufficient stirring. Then, the resultant was loaded in a horizontal stirring granulator, and granulated and dried at a jacket temperature of 50°C under reduced pressure. 8 Hours after the loading, a granulated and dried agglomerate having a diameter of from 2 mm to 3 mm was obtained. The granulated and dried agglomerate was moved onto an alumina heat-resistant plate, and subjected to heat treatment under reduced pressure to promote alloying of the mechanical alloy at an atomic level. Hydrogen contained in the raw materials was desorbed at 480°C in the course of temperature increase to cause a sharp increase in pressure in a heat treatment furnace. After the desorption was completed and the pressure became 10⁻² Pa or less, the temperature was retained at a maximum reaching temperature of 1,140°C for 600 minutes to complete fusion and alloying of the particles.

The alloy agglomerate after the heat treatment was subjected to gradual oxidation, taken out from the furnace, and then crushed to achieve an average particle diameter of about 100 µm with a roll granulator. The "gradual oxidation" refers to a method involving forming an oxide film on the surface of a metal by gradually bringing the surface of a metal into contact with oxygen while dissipating oxidation heat so that the clean surface of a metal without an oxide film is prevented from igniting owing to abrupt generation of the oxidation heat through contact with high-concentration oxygen. Further, the crushed powder was washed with nitric acid to dissolve and remove calcium oxide remaining in the particles, and thus pores were formed. After the completion of the dissolution, the crushed powder was washed with pure water by decantation and fine particles in a dispersed state were removed by water flow. Then, granulated particles of yttrium-containing niobium powder to be required were recovered. Finally, the granulated particles were moved into a container, dried at 50°C under reduced pressure, and then finished by drying at 250°C. Thus, a sample of granulated powder was obtained. The physical property values of the sample are shown in Table 1.

Examples 2 to 4 and Comparative Example 1: The samples of granulated powders were each obtained in the same manner as in Example 1 except that the atomic ratio of niobium to yttrium was changed as shown in Table 1. Various conditions other than the changed part and the physical property values of each sample are also shown in Table 1.

**[Table 1]**

| | Metal oxide | Atomic ratio of Nb:metal | Raw material classification (*1) | Means for mixing metal oxide and niobium hydride | D50 (*2) | Pore forming material | Chemical analysis value | | Specific surface area | Bulk density |
|---|---|---|---|---|---|---|---|---|---|---|
| | | | | | | | O[%] | Y [ppm] | | |
| | | | | | µm | | | | [m²/g] | [g/cm³] |
| Example 1 | Y₂O₃ | 997:3 | ○ | Bead mill | 0.5 | Calcium oxide | 3.7 | 2,800 | 1.94 | 1.01 |
| Example 2 | Y₂O₄ | 995:5 | ○ | Bead mill | 0.5 | Calcium oxide | 3.5 | 4,700 | 2.02 | 0.99 |
| Example 3 | Y₂O₅ | 990^{:}10 | ○ | Bead mill | 0.5 | Calcium oxide | 4.0 | 9,300 | 2.12 | 1.03 |
| Example 4 | Y₂O₆ | 970:30 | ○ | Bead mill | 0.5 | Calcium oxide | 4.1 | 27,000 | 2.24 | 1 |
| Comparative Example 1 | None | 1,000:0 | ○ | Bead mill | 0.5 | Not used | 3.6 | N.D. | 2.14 | 1.07 |

| | | | | | | | | | | |
|---|---|---|---|---|---|---|---|---|---|---|
| (*1) Whether or not niobium hydride (raw material) passes through a sieve having an opening of 1 mm (*2) 50% particle size in a volume-based cumulative particle size distribution | | | | | | | | | | |

### Example 5:

Camphor in an amount of 3% was mixed in the sample of a granulated product obtained in Example 1, and the mixture was formed into a niobium molded body with an automatic molding machine. The molded body was adjusted to have a volume of about 20 mm³ and a density of about 3.0 g/cm³, and a niobium wire was planted as an anode lead in the center of the molded body. The molded body was placed in a vacuum sintering furnace and retained at a degree of vacuum of 10⁻³ Pa or less and a maximum temperature of 1,250°C for 30 minutes, to produce a sintered body. The buckling strength (N/mm²) of the sintered body was shown in Table 2. Electrolytic chemical conversion was performed at a current density of 200 mA/g by using as an anode the sintered body and as an electrolyte a 1 mass% phosphoric acid aqueous solution at 90°C. The sintered body was retained for 3 hours at a constant voltage after the voltage reached 20 V, to produce an anode body. The anode body was washed with flowing water and dried, and then subjected to various tests. The electrical characteristic values of the anode body are shown in Table 2.

### Examples 6 to 8 and Comparative Example 2:

Sintered bodies and anode bodies were produced by the same steps as in Example 5 except that the powders obtained in Examples 2 to 4 and Comparative Example 1 were used as the sample of granulated powder in Example 5, and subjected to various tests. The buckling strength of the sintered bodies and the electrical characteristic values of the anode bodies are shown in Table 2.

### Presentation of Withstand Voltage Curve of Anode Body:

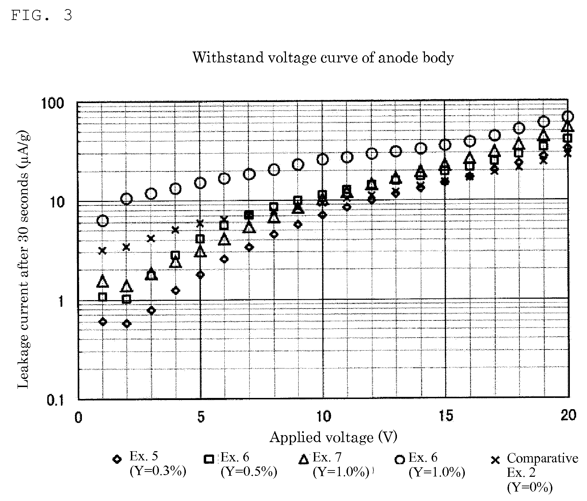

The anode bodies of Examples 5 to 8 and Comparative Example 2 were each measured for an element leakage current 30 seconds after applying a voltage of 1 V. Next, the voltage was increased by 1 V to 2 V, and the element leakage current was measured in the same manner after 30 seconds. In such way, the element leakage current was measured by increasing the applied voltage by 1 V up to 20 V. The relationship between the applied current and the leakage current thus obtained is shown in FIG. 3. The leakage current values at a voltage of 14 V in the measurement are also shown in Table 2.

### Comparative Example 3:

According to Example 159 of Patent Document 3, niobium and yttrium at a ratio of 97:3 were mixed by arc melting, and subjected to heat treatment and pulverization. The resultant sample of granulated powder was used to produce a sintered body. The leakage current value of the sintered body at a voltage of 14 V is shown in Table 2.

**[Table 2]**

| | Buckling strength of sintered body [N/mm²] | Electrostatic capacitance of anode body [µFV/g] | | Increase rate of capacitance After heating/Normal | Leakage current at 14 V [µA/g] |
|---|---|---|---|---|---|
| | | Normal measurement | Measurement after heating | | |
| Example 5 | 119.5 | 117,000 | 137,000 | 1.17 | 13 |
| Example 6 | 114.0 | 125,800 | 150,400 | 1.20 | 17 |
| Example 7 | 90.8 | 143,800 | 168,300 | 1.17 | 20 |
| Example 8 | 88.7 | 134,200 | 157,000 | 1.17 | 33 |
| Comparative Example 2 | 99.0 | 9, 600 | 119,700 | 1.25 | 14 |
| Comparative Example 3 | - | - | - | - | 23 |

As apparent from the measurement results shown in Table 1, it can be said that alloying is efficiently performed because the contents of yttrium, which are detected in Examples 1 to 4, are from 80% to 90% with respect to the initial loaded amounts of yttrium.

In addition, yttrium oxide having an oxygen atom (0):yttrium atom (Y) ratio in its molecule of 48:178 is used as a raw material. Therefore, when the content of yttrium increases by 1 part by mass, the content of oxygen increases by 48/178≈0.27 part by mass. For example, in Examples 1 to 3, the contents of yttrium are 2,800 ppm, 4,700 ppm, and 9,300 ppm, respectively, and hence the contents of oxygen increase by about 760 ppm, about 1,270 ppm, and about 2,500 ppm, respectively. The content of oxygen in Comparative Example 2 serving as a blank value is 3.6%, and hence the contents of oxygen in Examples 1 to 3 were about 3.68%, about 3.73%, and about 3.85%, respectively, based on the blank value as a reference. It can be said that those values are correlated with the analysis values while they may have some margin of error.

The specific surface area increases by about 10% at most with respect to the blank value of Comparative Example 1 as a reference. Therefore, it is considered that a sintering inhibition effect at the time of heat treatment is small. The bulk density is slightly small as compared to the blank value. It is considered that a granulation effect is weakened in the granulation and addition step because the additive even in the mechanical alloy still has a feature of ceramics.

The measurement results shown in Table 2 are the characteristics of the sintered bodies and anode bodies produced from the granulated powders obtained by the method of the present invention. The strength of the sintered body increases by 20% in Examples 5 and 6 and reduces by 10% in Examples 7 and 8 with respect to the blank value of Comparative Example 2 as a reference. When the content of yttrium increases, the feature of ceramics starts to appear. As a result, the strength tends to reduce. In addition, the electrostatic capacitance increases by from 20% to 40% in Examples 5 to 8 with respect to the blank value. The content of yttrium in Example 8 is about three times as large as the content of yttrium in Example 7, but the electrostatic capacitance in Example 7 is larger than that in Example 8. In addition, in view of an increase rate of capacitance after the heating, Comparative Example 2 has the highest rate and Examples 5 to 8 have lower rates. This reveals that the transfer of oxygen in the chemical conversion film through the heating is suppressed when yttrium is present.

Niobium and yttrium originally have specific dielectric constants of 41 and 11, respectively. Therefore, when the presence ratio of yttrium increases, the electrostatic capacitance reduces. In addition, there are niobium oxides other than niobium pentoxide each having a composition with less oxygen, such as niobium dioxide. Those niobium oxides do not become ferroelectric bodies, and hence their presence in the chemical conversion oxide film, which is a dielectric body, leads to a reduction in electrostatic capacitance.

From the above-mentioned fact and the results shown in Table 2, it is presumed that, in Examples 5 to 7, yttrium is present in the chemical conversion oxide film and prevents the transfer of oxygen in the oxide film, to thereby suppress a reduction in electrostatic capacitance caused by the oxides which are not ferroelectric bodies due to the transfer of oxygen, resulting in a larger electrostatic capacitance than the blank value. In Example 8, the presence amount of yttrium is excessive, and hence owing to the characteristics of yttrium, the dielectric constant reduces and the electrostatic capacitance is smaller than that of Example 7 while larger than that of Comparative Example 2.

Accordingly, in order to obtain the largest electrostatic capacitance by the method of the present invention, it can be said that the upper limit of the ratio of yttrium is more preferably 1 at%.

The withstand voltage curves of the anode body elements of Examples 5 to 8 and Comparative Example 2 are shown in FIG. 3. In Examples 5 to 7, the leakage currents were lower than the blank value of Comparative Example 2 as a reference up to an applied voltage of about 7 V, and hence it is presumed that the transfer of oxygen caused by an electric field is suppressed by yttrium. In Example 8, the atomic ratio of yttrium is high, and hence the uniformity of the chemical conversion oxide film produced by niobium serving as a matrix element is impaired, resulting in a high leakage current even at a low voltage. It can be judged also from FIG. 3 that the upper limit of the ratio of yttrium is more preferably 1 at%.

In addition, when attention is focused on the leakage current values at a voltage of 14 V shown in Table 2, it is revealed that the values of Examples 5 to 7 are lower than that of Comparative Example 3. From the fact, it can be confirmed that the niobium sintered body produced by the production method of the present invention, in particular the niobium sintered body having a content of yttrium of 1 at% or less has a low leakage current value and exhibits excellent characteristics as compared to the sintered body of Comparative Example 3 produced by a different method, while the detailed conditions are slightly different from each other.

## Claims

1. A method of producing a niobium granulated powder, comprising the steps of:
mixing niobium hydride and a metal oxide by a mechanical alloying method to produce a mechanical alloy;
pulverizing the mechanical alloy;
subjecting the pulverized mechanical alloy to heat treatment to allow the pulverized mechanical alloy to aggregate, to thereby form a granulated product.

2. The method of producing a niobium granulated powder according to claim 1, in which the metal oxide to be used includes a metal oxide represented by a composition formula M₂O₃, where M represents a metal element which can be a trivalent cation.

3. The method of producing a niobium granulated powder according to claim 2, in which M represents one or more kinds selected from scandium, yttrium, lanthanoids, and actinoids.

4. The method of producing a niobium granulated powder according to claim 3, in which M represents yttrium.

5. The method of producing a niobium granulated powder according to any one of claims 1 to 4, in which the niobium granulated powder has an atomic ratio of niobium to a metal element derived from the metal oxide falling within a range of from 997:3 to 970:30.

6. The method of producing a niobium granulated powder according to any one of claims 1 to 5, in which the niobium hydride to be used is composed of powder having passed through a sieve having an opening of 1 mm.

7. The method of producing a niobium granulated powder according to any one of claims 1 to 6, in which a stirring ball mill is used for mixing niobium hydride and a metal oxide.

8. The method of producing a niobium granulated powder according to any one of claims 1 to 7, comprising, after the mixing niobium hydride and a metal oxide, pulverizing the mixture so that a D₅₀ value, which is a 50% particle size in a volume-based cumulative particle size distribution, measured with a laser diffraction particle size distribution analyzer is 0.7 µm or less.

9. The method of producing a niobium granulated powder according to any one of claims 1 to 8, in which an alkaline earth metal oxide is used as a pore forming material in the case of subjecting the mechanical alloy to heat treatment to thereby form a granulated product.

10. A sintered body of the niobium granulated powder obtained by the production method claimed in any one of claims 1 to 9.

11. An anode body, which is produced from the sintered body claimed in claim 10.

12. A capacitor, comprising the sintered body claimed in claim 10 as an anode.
